# EUROPEAN PATENT APPLICATION

(11) **EP 1 746 388 A1**
(43) Date of publication of application: **24.01.2007**
(21) Application number: 05447172.7
(22) Date of filing: 18.07.2005
(51) Int. Cl.: G01C 21/34

(54) **Navigation system using predefined tracks**

(71) Applicant: On Track Navigation bvba, 9620 Zottegem (BE)
(72) Inventor: De Sutter, Philiep, 9620 Zottegem (BE)
(74) Representative: Bird, William Edward

(57) **Abstract**

The turn-by-turn route description according to embodiments of the present invention is produced upfront, rather than calculated. It comprises the route description as a sequence of connected vectors that represent the course of the route selected, together with characteristics of those vectors and guidance-related information at each decision point. The guidance-related information may be hard-coded guidance instructions, or may provide access to guidance instructions.

## Description

### Technical field of the invention

The present invention relates to methods and systems for navigation, and in particular to methods and devices for enabling turn-by-turn navigation along a pre-determined route or track, possibly independently from a map.

### Background of the invention

In today's world, Global Positioning System (GPS) navigation is becoming increasingly successful. At present and in the context of this invention, one can distinguish between two different kinds of navigation systems "turn-by-turn navigation systems" and "positioning and track following navigation systems".

The so-called "turn-by-turn navigation systems" can be categorized according to different purpose and hardware combinations, but they all share the following basics:
- a vector map content being stored on a storage means such as a DVD, a CD-ROM, a fixed hard disk or a removable storage medium,
- calculating means for calculating a route from location A to location B, possibly via an intermediate destination, and
- guiding means for giving turn-by-turn guidance instructions for getting a person from location A to location B over the calculated route.
The storage means and the calculation means may be local to the navigation system, such as a navigation system in a car, a PDA, mobile phone or transferable navigation device. Alternatively, mobile navigation systems, e.g. on PDA's or on mobile phones, may have built-in communication capabilities that allow them to access map and routing instructions on-line rather than having to store and/or calculate this content on the device itself.

"Positioning and track following navigation systems" offer few more functionalities than GPS positioning and givingcompass directions to the next position along the track one wants to follow to the selected destination. They can guide one along a pre-loaded GPS track or along a pre-calculated and stored route. A GPS track, as commonly known, is nothing more than a series of WGS '84 co-ordinates, either measured with a GPS system while driving or walking the track, or produced by digitizing from a map, an aerial or a satellite photograph, a series of positions that represent the course of that track. Once such a GPS track is available, one can use a GPS track navigation system to be guided along the course of that track.

However, the guidance and navigation functionality that such a positioning and track following navigation system can offer is quite limited due to the limited information contained in the GPS track: only a series of coordinates that represent the course of the track. As such these systems cannot offer much more than a compass direction, an indication of the direction to follow, some distance measurement and the position along the track. The user of the system has to continuously interpret his position along the track to take decisions about the directions to be followed and the turns to be taken to 'stay on track'. Although this could be already helpful as such, this functionality is hardly comparable with the turn-by-turn guidance functionality that people are used to with navigation systems that use a digital vector map to calculate a route and the turn-by-turn guidance instructions along it. More specifically, what is commonly called 'turn-by-turn' guidance; giving real guidance instructions like 'turn right after 150 meters into Main Street', 'follow the road for 2.3 km, 'take the 2^{nd} exit at the next roundabout' or 'turn left into the unpaved road'; is simply impossible with a GPS track only.

In order to improve the guidance and navigation functionality along a GPS track, some high-end navigation systems use a GPS track in combination with a digital vector map. By overlaying the GPS track on the digital vector map they try to identify a number of waypoints along the track which are used to re-calculate, now on basis of the vector map, a route with turn by turn guidance instructions for each route section in between them. In order to guarantee that the calculated route still perfectly coincides with the original GPS track, in principle one needs to identify one waypoint for each decision point (crossing) along the route one needs to use. In practice this is not workable, as either the maximum treatable number of waypoints will be exceeded or the route sections in between the waypoints will be that short that the route guidance instructions to each of these destinations become meaningless because they only guide to the next crossing. In case one does not define a waypoint for each decision point, the calculated route (on basis of parameters as speed, distance, etc...) will in most cases not coincide with the original track and as such one will be guided along roads one didn't want to travel. Besides this major difficulty, the solution also has a number of other shortcomings, disadvantages and implementation difficulties, of which the necessity of a vector map that amongst others must contain all the road segments along the GPS track (which is often not the case), the extra storage needs, the required system performance and the need to match the GPS track with the corresponding map elements (while accuracy of the map and the track can differ substantially) seem to be the most important ones. Even if a, typically high-end navigation system, could cope with these problems to a certain extent, a simpler solution with less impact on cost and selling price would be preferred.

### Summary of the invention

It is an object of the present invention to provide system and methods to improve the functionality and performance of navigation systems that use pre-defined tracks and routes. The above objectives are accomplished by a method and device according to the present invention.

The present invention relates to a method of enabling turn-by-turn navigation along a non-calculated pre-determined track using an electronic device, the method comprising: providing a turn-by-turn route description of the pre-determined track, comprising at least a non-calculated vector representation of the pre-determined track and hard-coded guidance-related information with the vector representation. The non-calculated vector representation and the hard-coded guidance-related information may be all information needed to enable turn-by-turn navigation or may be information which provides a link to such detailed information, e.g. via the Internet and a web-site, for instance over a wireless link. Alternatively, the guidance-related information may comprise hard-coded guidance instructions.

The guidance-related information may comprise characteristics of decision nodes of the vector representation so that guidance instructions for each decision node are derivable from the guidance-related information. The guidance-related information may e.g. be the complete topology of intersections.

The guidance instructions may comprise any of visual or audible navigation instructions.

The turn-by-turn route description furthermore may comprise, for at least one vector of the vector representation, additional information about the part of the track that the vector represents. The additional information may comprise at least one of geometry, street name, road class, topology, connectivity of the vector, height and slope information, pavement type, environment, vicinity info, tourist information, scenic routes, panoramic views, references to points-of-interest along the route, user specific info such as existence of cycle tracks, pedestrian crossings, footpaths. It is an advantage that specific information can be stored as part of the track. Thus, it is avoided that this needs to be done for the complete vector map. It therefore reduces the production cost and makes maintenance easier and less expensive. It is furthermore an advantage that the additional information can be used independently from the map, i.e. vector track with additional content.

The method furthermore may comprise using the provided turn-by-turn route description of the pre-determined track for performing navigation.

The method furthermore may comprise displaying at least part of the pre-determined track on top of a displayed map.

The invention furthermore relates to a method for producing a non-calculated pre-determined track for turn-by-turn navigation, the track being storable in an electronic device, the method comprising:
producing a non-calculated vector representation of the pre-determined track, the vector representation comprising a plurality of decision nodes, and adding, for each decision node, hard-coded guidance-related information to the vector representation of the pre-determined track.

The method furthermore may comprise storing the vector representation together with the hard-coded guidance-related information.

The guidance-related information may comprise hard-coded guidance instructions.

The guidance-related information may comprise characteristics of decision nodes of the vector representation so that guidance instructions are derivable from the guidance-related information.

The method furthermore may comprise, for and with at least one vector of the vector representation, storing additional information about the part of the track that the vector represents. The additional information may comprise at least one of geometry, street name, road class, topology, connectivity of the vector, height and slope information, pavement type, environment, vicinity info, tourist information, scenic routes, panoramic views, references to points-of-interest along the route, user specific info such as existence of cycle tracks, pedestrian crossings, footpaths.

The invention also relates to a device for providing turn-by-turn navigation along a non-calculated pre-determined track, comprising: first memory means storing a non-calculated vector representation of the pre-determined track along with hard-coded guidance-related information, and means for providing navigation instructions from the vector representation and the guidance-related information. The device also may include means for providing access to the guidance-related information.

The means for providing navigation instructions may comprise control means for deriving the navigation instructions from the hard-coded guidance-related information.

The means for providing navigation instructions furthermore may comprise visualisation means for visualising the derived navigation instructions.

The means for providing navigation instructions furthermore may comprise audio means for making the derived navigation instructions audible.

The device furthermore may comprise a second memory means for storing a vector map comprising at least data corresponding to the vector representation of the pre-determined track. The at least data corresponding to the vector representation of the pre-determined track may be at least topology of the neighbourhood of the pre-determined track.

The device may furthermore comprising visualisation means for visualising the vector representation of the pre-determined track on top of a corresponding part of the data of the vector map. Visualising the vector representation of the pre-determined track may be highlighting the vectors. The visualisation means may include a screen.

The device furthermore may comprise a position sensor means. The position sensor means may e.g. be a GPS receiver.

The device furthermore may comprise means for downloading a non-calculated pre-determined track from a remote location, the downloaded pre-determined track being for being stored in the first memory means.

The invention also relates to a computer program product, a machine readable data storage device for storing such a computer program product, and the transmission of such a computer program product over a local or wide area telecommunications network, the computer program product, when executed on a processing device, executing any of the methods as described above.

The invention furthermore relates to a carrier medium storing a non-calculated vector representation of a pre-determined track, the vector representation comprising decision nodes for navigation purposes, wherein the carrier medium furthermore stores hard-coded guidance-related information.

It is an advantage of the present invention that the functionality and performance of navigation systems that use predefined tracks and routes can be improved by enabling Turn by Turn navigation along those tracks and routes. It is also an advantage that this may be done independently from a vector map. It is furthermore an advantage that this may be done exactly corresponding with the course of the route one wants to travel.

An advantage of some embodiments of the present invention is that it may provide systems and methods that increase the availability, the quality, the accuracy and the information content of pre-defined routes and tracks for navigation systems.

Particular and preferred aspects of the invention are set out in the accompanying independent and dependent claims. Features from the dependent claims may be combined with features of the independent claims and with features of other dependent claims as appropriate and not merely as explicitly set out in the claims.

The above and other characteristics, features and advantages of the present invention will become apparent from the following detailed description, taken in conjunction with the accompanying drawings, which illustrate, by way of example, the principles of the invention. This description is given for the sake of example only, without limiting the scope of the invention. The reference figures quoted below refer to the attached drawings.

### Brief description of the drawings

Fig. 1 is a hardware block diagram of a route guidance system in accordance with an embodiment of the present invention.
Fig. 2 is a block diagram illustrating components of the navigation programming shown in Fig. 1.

In the different figures, the same reference signs refer to the same or analogous elements.

### Definitions

The following terms are provided solely to aid in the understanding of the invention. These definitions should not be construed to have a scope less than understood by a person of ordinary skill in the art.

**GPS:** Global Positioning System. A system of satellites and receiving devices used to compute positions on the earth. GPS is used in navigation.

**GPS track:** a series of coordinates that represent the course of a track.

**WGS '84 co-ordinates:** World Geodetic System 1984: WGS 84 is an earth fixed global reference frame, including an earth model. It is defined by a set of primary and secondary parameters:
- the primary parameters define the shape of an earth ellipsoid, its angular velocity, and the earth mass which is included in the ellipsoid reference, and
- the secondary parameters define a detailed gravity model of the earth.
More information can be found on hftp://www.wgs84.com/

**Vectorised track:** a series of vectors that represent the course of a track or route in a way the connectivity and topology of the different track segments are explicitly given;

**Pre-determined track:** a track or route of which the course is fixed and pre-determined on the basis of parameters that cannot be taken into account by automatic route calculation.

**Vector map:** a map that uses lines and polygons as opposed to pixels to display streets and other map content.

**Turn-by-turn navigation:** navigation methodology whereby a user receives an explicit turn or navigation instruction at each decision point along the route or track to be followed.

### Description of illustrative embodiments

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

The terms first, second and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

The invention will now be described by a detailed description of several embodiments of the invention. It is clear that other embodiments of the invention can be configured according to the knowledge of persons skilled in the art without departing from the true spirit or technical teaching of the invention, the invention being limited only by the terms of the appended claims.

According to the present invention, a turn-by-turn route description of a non-calculated, pre-determined route or track is provided or used. With a non-calculated pre-determined route or track is meant a route or track for providing guidance from a first location A to a second location B or for providing guidance in a closed circuit, which is not calculated on the fly, contrary to route descriptions obtained from conventional navigation systems, and which can be in principle not-calculatable for whatever reason. Such reasons may for example be no coverage of selected route segments in an original vector map, no vector map present, or the vector map present not having sufficient details, or pre-determined track not obtainable by standard constraints like shortest, fastest, etc.... In conventional navigation systems, a user has usually little influence on the trajectory finally provided. In conventional navigation systems, once one or more constraints on the route to follow are fixed, a starting point and a destination point, and possibly one or more intermediate waypoints are introduced, pieces of route between the successive waypoints are calculated in accordance with the constraints, and a corresponding route description is generated. Since this calculated route is based on the road segments of the vector map used, the system can now also generate turn-by-turn navigation instructions at each intermediate decision point to guide the user along the course of that calculated route. However, since the system automatically calculates the route between two waypoints, the user has no control over the path that will be followed. Of course, by specifying some constraints, such as for example shortest route or fastest route, or exclusion of certain road types, the user has some influence on the path to follow, but the automatically calculated route will rarely coincide with the course of the route the user wants to follow on basis of more subjective parameters than speed and distance, or if the route is a specifically known and published route that follows a certain pre-defined trace. After all, the purpose of the user in accordance with the present invention is to follow a route that is interesting for his specific kind of travelling - walking, cycling, running, tourism, sightseeing, etc. - and these are preferences that a conventional navigation system cannot take into account as parameters in a route calculation. The user thus wants to follow a non-calculated, even non-calculatable, pre-determined route.

The only way to overcome this shortcoming in conventional navigation systems would be to identify as many waypoints as there are decision points along the route. The result would not only often go beyond the system limits of typically a maximum of 50 to 250 waypoints, the work involved comes close to fully digitising the course of the route. On top of that, in many cases the roads or transportation elements along the pre-determined route one wants to follow may not be even part of the vector map that is being used, especially in cases of non-paved roads, paths and small tracks. As a consequence, the possibility to derive the turn-by-turn instructions from a map by matching the course of the pre-determined route with a vector map or by calculating the route on the basis of a lot of intermediate waypoints is not a realistic, nor feasible option.

The turn-by-turn route description according to embodiments of the present invention solves this problem by producing upfront, rather than calculating, the route description as a sequence of connected vectors, called map vectors or track vectors, that represent the course of the route selected, together with characteristics of those vectors and turn-by-turn instructions at each decision point, or guidance-related information from which the turn-by-turn instructions at each decision point can be derived. The turn-by-turn route description according to the present invention is an electronically storable representation of the route. Decision points are points where a characteristic changes and as such an additional instruction is needed. A decision point may for example be an intersection, a crossing of a street with another transportation element (water, rail ...) or with a border, a change of street name, a change of traffic flow, a change of municipality. In general one can introduce a decision point wherever one wants to give an instruction, warning, additional info, ... Guidance-related information is any information which allows access to actual guidance instructions. Such guidance-related information may be a code referencing to a corresponding guidance instruction, a link to the actual guidance instruction, pieces of information allowing to derive, e.g. calculate the actual guidance instruction, or the actual guidance instruction itself.

The way the route is described according to embodiments of the present invention is not really different from the way a calculated route would be described. The main difference is that the route description as well as the turn-by-turn instructions are not the result of a route calculation using the intelligence of a map, but are produced up front and made available to the user as a ready to use route description that no longer needs a map, except for maybe background display purposes.

The route description according to the present invention contains all information needed to enable turn-by-turn navigation.

An advantage of such a vectorised and attributed turn-by-turn route description according to an embodiment of the present invention is the fact that it enables turn-by-turn track and route navigation without the need to store and access a complete vector map. The pre-determined track does not need to be overlaid onto a vector map in order to be able to receive turn-by-turn guidance. As such maximum performance and minimum storage needs can be realized without losing functionality.

Although some high-end systems might not have that much storage and performance limitations and could prefer to keep the vector map available for other navigation functions than track following, the possibility to load and use an independent vector track that can contain specific information not part of the map or that can follow a course not even represented in the map, is also for those systems an interesting option. The individual turn-by-turn tracks could be downloaded onto a navigation system, at any moment in time, on an individual basis, where and when needed and without suffering from any compatibility problems, like differences in accuracy and completeness, with the vector map in use. As such, there is no need to sell all the track information together with the map and tracks can be sold separately whenever the user needs them.

Also from a map publishers point of view the approach is interesting since there is no longer a need to represent each and every small and unimportant road or track segment in the map in order to allow incidental routing needs since the route will contain the full track description itself.

Anyhow, for all systems that do face storage and performance limitations or that want to offer only turn-by-turn track navigation at lower prices than full navigation, the availability of ready to use turn-by-turn tracks is an advantage. Especially for those future navigation systems that will run on small devices like watches, heartbeat en velocity meters - often without map display - turn-by-turn track and route navigation without the need to store or access a full vector map will be very important.

According to embodiments of the present invention, to each individual track vector, specific information may be linked about the part of the track that the vector represents. This information, stored as attributes and relationships of the vectors, may e.g. be the geometry, the street name, road class, topology and connectivity of the vector, but also information specifically relevant for the purpose of track and route navigation could be added. Examples thereof are height and slope information, pavement type, environment and vicinity info, tourist info, scenic routes, panoramic views, references to Points of Interest (POI) along the route and user specific info like the existence of cycle-tracks, pedestrian crossings, footpaths, etc.

Production and storage of such specific information as part of the track itself has clear advantages versus making it part of the vector map. One is clearly the production cost, since, not knowing upfront which tracks will ever be overlaid, in prior art situations the information should be produced for the full map coverage. By restricting the production of all this information to the course of the track only, the collection, production and maintenance becomes much more feasible.

A key feature of all embodiments of the present invention is that turn-by-turn navigation is applied to routes which are not calculated, but to pre-defined routes which are produced and stored together with hard-coded guidance-related information. Due to the fact that guidance-related information is hard-coded with the tour or track data, turn-by-turn navigation is made possible.

Due to the above-described turn-by-turn route description now made available, a similar functionality as to that obtained by calculated routes is now provided for pre-determined routes which are not calculated and which in principle could be not calculatable.

According to one aspect, the present invention provides a method of performing turn-by-turn navigation along a non-calculated pre-determined track. The method comprises using a turn-by-turn route description of the pre-determined track comprising at least a vector representation of the pre-determined track as described in any of the embodiments above. Guidance-related information is hard-coded with the vector representation of the pre-determined track, and this way enables the route description of the pre-determined track to be used autonomously, i.e. without a complete digital vector map being needed to be present on the navigation system.

In one embodiment, the guidance-related information may comprise hard-coded guidance instructions. In an alternative embodiment, the guidance-related information may comprise characteristics of decision nodes of the vector representation so that guidance instructions are derivable from the guidance-related information. For example, the complete topology of each decision node, e.g. intersections, may be known and stored with the vector representation of the pre-determined track. In that case, at every decision node, the guidance instructions can be calculated from the vector representation and the topology - e.g. "at the next roundabout take the 2^{nd} to the right". Guidance instructions, whether hard-coded or derived, may take the form of visual and/or audio instructions that are provided along the way as the user is travelling the pre-determined route or track. To support the audio instructions one might even consider to store the phonetic transcriptions of the turn-by-turn instructions to support high quality text to speech translations. Guidance instructions may also be provided by linking to external information sources, e.g. by linking to an information source via a wireless link, and deriving the guidance instructions from the hard-coded guidance-related information e.g. a code for which the corresponding instruction is downloaded from a website.

In a further aspect, the present invention provides a device for providing turn-by-turn navigation along a non-calculated pre-determined track. A navigation device for use with the present invention may be of well-known conventional design. Included within the scope of the present invention, however, is a navigation device that includes the data and/or instructions to implement aspects of the methods for providing turn-by-turn navigation along a non-calculated pre-determined track in accordance with embodiments of the present invention.

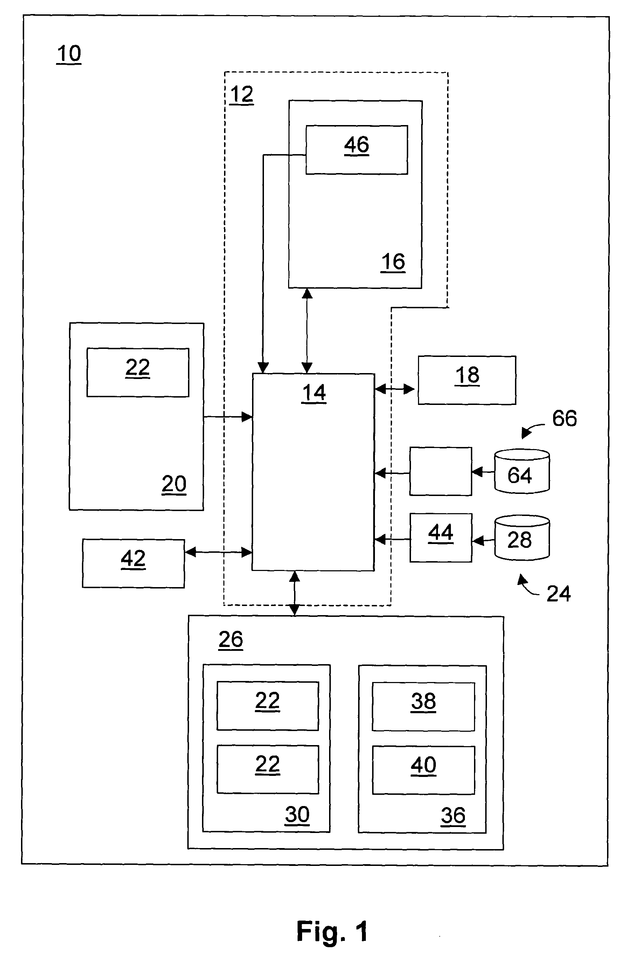

A navigation system 10 according to an embodiment of the present invention is illustrated in Fig. 1. The navigation system may be applied to a vehicle such as a car or a bicycle, or it may be portable, e.g. a hand-held device such as a PDA, a palm-top type or device or a mobile phone with navigation functionality.

The navigation system 10 is a combination of hardware and software components. The hardware components of the navigation system 10 may include a navigation computer 12. In a preferred embodiment this navigation computer 12 includes a processing element 14, memory 16, 18 and other circuit elements, as is conventionally known. In the embodiment illustrated in Fig. 1, the navigation system 10 includes as processing element 14 a microprocessor, it includes non-volatile memory 16 as program memory, variable memory 18 and various support circuitry for interfacing with attached peripheral devices, e.g. I/O ports. These attached peripheral devices may include a positioning system 20 including one or more position sensors 22, optionally a mass storage device 24 such as CD ROM drive, and a user interface 26.

In the embodiment illustrated in Fig. 1, the navigation system 10 includes a positioning system 20 that provides information indicative of a present position of the user. The positioning system 20 may include position sensors 22 or other components that sense the speed, orientation, direction of movement and so on of the user. The positioning system 20 may also include a global navigation receiver such as a GPS receiver.

A mass storage device 24 may be provided with means to read route descriptions 28 of pre-determined tracks or routes stored thereon. An example of a mass storage device 24 which may be used is a CD-ROM drive or solid state memory. Another example is a PCMCIA reader and corresponding cards. The route descriptions 28 stored according to embodiments of the present invention are turn-by-turn route descriptions of at least one pre-determined track or route, comprising at least a vector representation of the pre-determined track or route and with the vector representation of the pre-determined track or route hard-coded guidance-related information.

The navigation system 10 also includes a user interface 26. The user interface 26 includes appropriate means 30 for receiving instructions and/or input from a user of the navigation system 10, e.g. selection of a pre-determined track the user desires to follow. The instruction receiving means or input devices 30 may include an input panel 32 such as e.g. a keyboard, a keypad, a pointing device such as a mouse, a trackball or a touchpad, a microphone 34, as well as other means for accepting end-user input, such as voice recognition software and so on, through which the end user may request navigation information and services. The user interface 26 also includes appropriate means 36 for providing information back to the user. The information providing means or output devices 36 may include a display 38, e.g. an LCD, and/or speakers 40 (including speech synthesis hardware and software) to communicate pertinent navigation information with the user. Persons skilled in the art will recognize that an auditory input/output system 34, 40 may substitute or be used in tandem with a visual input/output system 32,38.

All of the components described above may be conventional or other than conventional. The manufacture and use of these components are known to persons skilled in the art. For example, the processing element 14 may be of any type conventionally used in navigation systems, as well as any equivalent or other suitable processing elements or processing elements that may be developed in the future. The processing element 14 may be a microprocessor, for instance it may be a micro-controller. In particular, it may include a programmable controller, for instance a programmable digital logic device such as a Programmable Array Logic (PAL), a Programmable Logic Array (PLA), a Programmable Gate Array (PGA), especially a Field Programmable Gate Array (FPGA).

In order to provide navigation features to a user, the navigation system 10 according to embodiments of the present invention uses turn-by-turn route descriptions 28 of a pre-determined track, the turn-by-turn route description comprising at least a vector representation of the pre-determined track and guidance-related information which is hard-coded with the vector representation of the pre-determined track. The turn-by-turn route descriptions 28 may be stored in the navigation system 10, near the navigation system 10, or alternatively may be stored remotely and made available to the navigation system 10 through a wireless communication system 42 which may be part of the navigation system 10. In an embodiment of the present invention, a complete vector map may be stored in a storage medium in the navigation system 10, and the pre-determined track route description 28 may be stored in a remote location and made available to the navigation system 10 over the wireless communication system 42 from a remote location.

In the embodiment shown in Fig. 1, the route description 28 of the pre-determined track may be stored on a mass storage device 24 which is located locally in the navigation system 10. Accordingly, the navigation system 10 includes a drive 444 (or other suitable peripheral device) into which the mass storage device 24 can be installed and accessed. In one embodiment, the mass storage device 24 is a CD ROM disk. In another alternative embodiment, the mass storage device 24 may be a PCMCIA card in which case the driver 44 would be substituted with a PCMCIA slot. Various other storage media may be used, including fixed or hard disks, DVD disks, solid state memory or other currently available storage media, as well as storage media that may be developed in the future.

The route description 28 may take a variety of different forms. In one embodiment, the route description 28 is in the form of one or more computer-readable data files or databases. The route description 28 includes data specifying the positions of the track vectors part of the pre-determined route or track. The route description 28 also includes guidance-related information. The route description 28 may furthermore include, for at least one vector of the vector representation of the pre-determined track, additional information about the part of the pre-determined track that the vector represents. The additional information may include at least one of the geometry, the street name, road class, topology and connectivity of the vector, but also information specifically relevant for the purpose of track and route navigation could be added. Examples thereof are height and slope information, pavement type, environment and vicinity info, tourist info, scenic routes, panoramic views, references to Points of Interest (POI) such as tourist information along the route and user specific info like the existence of cycle-tracks, pedestrian crossings, footpaths, etc. The additional information associated with a road segment may be included in a single road segment record, or may be included in more than one type of record which are cross-referenced to each other.

In one embodiment, the route description 28 contains a plurality of map vectors. Each map vector represents a portion or segment of the pre-determined track or route. Each physical road segment has two nodes associated with it, one at each of the endpoints of the map vector. In this embodiment, the route description 28 also includes a plurality of data entities that represent these nodes. The route description 28 furthermore contains, for each of those nodes, corresponding to a decision point in the route, guidance-related information. This guidance-related information may be hard-coded guidance instructions ("turn left at this crossing") or may be information, e.g. topology at the nodes, from which guidance instructions can be derived.

The navigation system 10 uses the route description 28 to provide guidance instructions to the user. Preferably the guidance instructions are provided responsive to the present position of the user, as determined by the positioning system 20. Alternatively, the user may scroll through the available guidance instructions using the input devices 30.

In addition to the hardware components and route description 28, the navigation system 10 includes or uses a navigation software component 46. The navigation software component 46 includes the software that provides for the functions and/or features performed by the navigation system 10. The navigation software component 46 uses the route description 28 in conjunction with input from the user via the user interface 26, and possibly in conjunction with outputs from the positioning system 20, to provide various navigation-related features and/or functions.

The navigation software component 46 may be stored in a non-volatile storage medium 16 in the navigation system 10. Alternatively, the navigation software component 46 and the route description 28 may be stored together on a single storage device or medium. Alternatively, the navigation software component 46 may be located at a remote location and may be provided to or accessed by the navigation system 10 over a communication system, such as e.g. wireless communication system 42.

In one embodiment, the navigation software component 46 is written in the C programming language, although in alternative embodiments other programming languages may be used, such as e.g. C++, Java, Visual Basic and so on, and then compiled on an appropriate compiler.

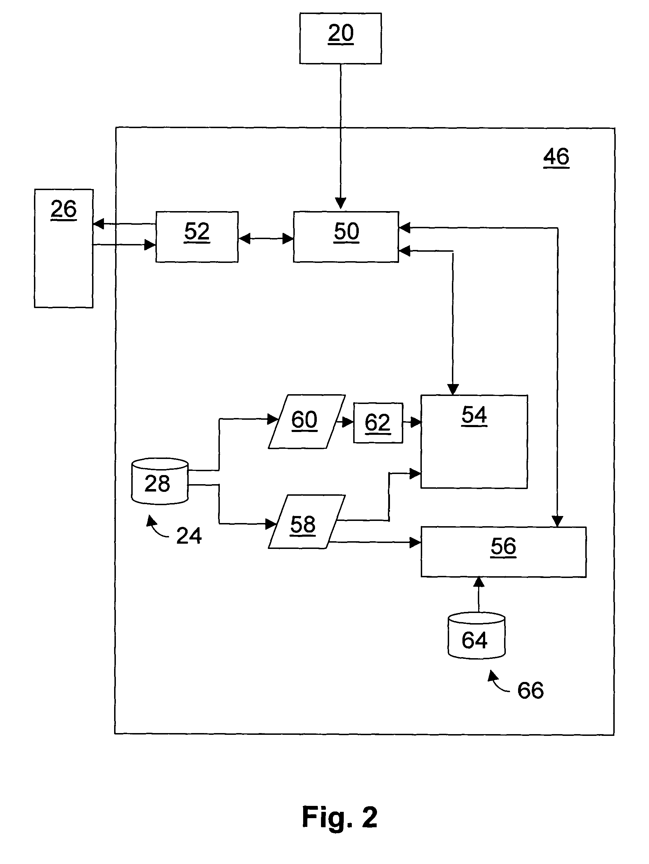

The navigation software component 46 may be formed of separate component applications (also referred to as programs, subprograms, routines or tools). The component applications of the navigation software component 46 work together through defined programming interfaces. Fig. 2 shows a block diagram illustrating some of the component applications for one embodiment of the navigation software component 46 included in the navigation system 10 of Fig. 1 In addition to the component programs shown in Fig. 2, the navigation programming may include other component sub-routines or programs not illustrated in Fig. 2 and known from conventional navigation systems.

In Fig. 2, the navigation software component 46 is shown to include a navigation application manager 50. The navigation application manager 50 is a program or routine that provides for overall management of the functions of the navigation system 10. The navigation application manager 50 may also include support for and interfaces to at least some of the navigation system hardware, such as e.g. the positioning system 20 and the user interface 26. The navigation application manger 50 includes user interface functions 52 to interface with the user interface hardware 26. The user interface functions 52 may provide for presenting a menu to the user, e.g. on the display 38 of the output devices 36 of the user interface 26, for accepting inputs from the user via the input devices 30 of the user interface hardware 26, for displaying results to the user on the output devices 36, e.g. display 38, of the user interface hardware 26, and so on.

The navigation software component 46 includes sub-programs or routines that interface with the navigation application manager 50 and that provide for specific navigation-related features or functions to be performed by the navigation system 10. These sub-programs may include a route guidance application 54 and a map display application 56. The navigation software component 46 may include other navigation applications in addition to the above ones.

The route description 28 according to embodiments of the present invention comprises a vector representation of the pre-determined track and hard-coded guidance-related information. From the vector representation a list 58 of map vectors may be extracted. This list 58 of map vectors extracted from the route description 28 is provided to the route guidance application 54. From the route description 28 also hard-coded guidance-related information 60 may be extracted. The guidance-related information 60 may be provided to a guidance instruction application 62 for deriving guidance instructions from the guidance-related information 60.

The route guidance application 54 uses the information in the list 58 and the guidance-related information 60 or guidance instructions derived from the guidance-related information 60, and in embodiments of the present invention solely this information, to provide navigation instructions to the user for travelling along the pre-determined route. The route guidance application 54 may include functions that identify locations along the pre-determined route at which manoeuvring instructions may be provided to the user. The route guidance application 54 may also include functions that formulate the manoeuvring instructions for visual output and/or audio output. In one embodiment, manoeuvring instructions are provided in advance of when the specific manoeuvre is required to be taken, so that the user can prepare to make the required manoeuvre.

In order to provide manoeuvring instructions at appropriate times and/or locations, the navigation system 10 may use data from the positioning system 20. The positioning system 20 determines the position of the user as he is travelling. Using this, manoeuvre instructions, which are related to positions along the pre-determined route or track, can be provided at appropriate times as these positions are approached.

The route guidance application 54 may also provide the user with information about the remaining distance to the destination location or to the next decision point. The navigation application manager 50 and the route guidance application 54 may also use the outputs from the positioning system 20 for this purpose.

The list 58 of map vectors of the route description 28 may also be provided to the map display application 56. The map display application 56 uses the information in the list 58 from the route description 28, as well as, optionally, possible other information from a geographic database 64 stored in a memory device 66, to provide graphical maps on the display 38 of the user interface 26. The memory device 66 storing the geographic database 64 may or may not be the same as the mass storage device 24 storing the route description 28. The graphical maps may either illustrate solely the topology of the pre-determined track or part thereof and the position of the user on the track, or it may illustrate parts of a more detailed map where the pre-determined track passes, the pre-determined track being overlaid on the part of the more detailed map. The path of the pre-determined track may be highlighted on the displayed maps. The map display application 56 interfaces with the navigation application manager 50 so that the display maps are provided as the user is travelling along the pre-determined route. The navigation application manager 50 and the map display application 56 may receive the outputs from the positioning system 20 for this purpose.

As an example of the above-described navigation system 10, illustrating but not limiting the invention, a user may decide that he wants to follow a tourist track in a city centre. A plurality of such pre-determined tracks may be made available for download, e.g. from the tourist information centre; for example an "architecture track", a track around the city centre showing different jewels of architecture, a "celebrity track", showing locations where celebrities have been born, have lived or worked, have died and are buried, and a "cosy places track", a track along some cosy places which a tourist might miss if he is not lead there.

If the user decides to download one of the pre-determined tracks, he makes the selection by means of the input device 30 of the user interface 26, and the route description 28 of the selected track or tour is downloaded via the wireless communication system 42 and stored into the mass storage device 24, e.g. being a hard disk of the navigation system 10. The route description 28 of this pre-determined track comprises a vector representation of the track and hard-coded guidance-related information. The route description 28 might also comprise additional information. For example, the "architecture track" might comprise additional information about each of the locations along the pre-determined track where something is note-worthy about the architecture. This additional information can be made available in audible form, or as a written description on the screen of the navigation device; anyway it will be presented to the user by means of any of the output devices 36 of the user interface 26.

If the navigation system 10 of the user comprises a memory device 66 storing a geographic database 64 with visualisable map content, the map display application 56 may show a portion of a detailed map with a portion of the pre-determined track or route overlaid thereon. The types of manoeuvres to be taken at various locations or decision nodes along the pre-determined track or route, location of certain types of features, POls and so on may be presented to the user by means of the output devices 36. Visible navigation instructions may comprise just a single arrow showing what direction to take at the next decision point. Alternatively, the pre-determined track may be overlaid on a vector map present in the navigation system, and the visible navigation instructions may comprise, next to an arrow pointing in the desired direction, also e.g. an icon representation corresponding with the shape of the intersection or crossing to be passed, or a further part of the track to be followed, as well as other topology, neighbouring streets or water for example.

According to a further aspect, the present invention provides a method for producing a non-calculated, pre-determined track or route for turn-by-turn navigation. The method comprises producing a vector representation of the pre-determined track, the vector representation comprising decision nodes, and adding, to each decision-node, hard-coded guidance-related information. The vector representation and the guidance-related information are stored together or are linked to each other.

The guidance related information may comprise hard-coded guidance instructions, or may comprise characteristics of decision nodes so that guidance instructions are derivable from the guidance-related information.

For and with at least one vector of the vector representation, additional information may be stored about the part of the track that the vector represents. This additional information, stored as attributes and relationships of the vectors, may e.g. be the geometry, the street name, road class, topology and connectivity of the vector, but also information specifically relevant for the purpose of track and route navigation could be added. Examples thereof are height and slope information, pavement type, environment and vicinity info, tourist info, scenic routes, panoramic views, references to Points of Interest (POI) along the route and user specific info like the existence of cycle-tracks, pedestrian crossings, footpaths, etc..... The additional information may also comprise permanent ID's of the map vectors in the original vector map. As such, a linking mechanism with the original vector map is introduced, that later on can be used, e.g. during updating processes, to visualise, correct and update the tracks and routes. When for example road geometry, attributes, topology or connectivity would change in the original vector map, this linking mechanism can be easily used to check where along the track such changes occurred, and to incorporate these changes into the turn-by-turn route description of the track.

A non-calculated, pre-determined track or route for turn-by-turn navigation may be produced according to the present invention according to different production methods.

A first production method comprises the use of existing digital vector maps to semi-automatically derive the pre-determined track. This process needs access to vector maps and corresponding licenses to make use of these. It needs an application that can store and visualise digital vector maps, e.g. one of the many commercially available GIS software. The different map segments that correspond with the course of the pre-determined track or route are then identified, without needing to digitise them, but by simply selecting them in their order of appearance along the pre-determined track. The course of the pre-determined track can be visualised on a display on top of the digital vector map and possible corrections can be easily made by selecting and deselecting map segments.

Once the pre-determined track is correctly identified, it can be represented as a sequence of map vectors that represent road and other map vectors in the original vector map, by storing the permanent ID's of these vectors or map elements. As such, a linking mechanism with the original vector map is introduced, which later can be used to visualise, correct and update the tracks and routes. When for example road geometry, attributes, topology or connectivity would change in the vector map, this linking mechanism can be easily used to check where along the pre-determined track changes occurred and to incorporate these changes into the route description of the pre-determined track.

Once the sequence of the map vectors that corresponds with the pre-determined track is identified, the turn-by-turn track can be generated automatically by extracting the selected vectors as well as all the attribute and relationship information that is relevant for the turn-by-turn track navigation, including guidance-related information, e.g. topology of crossings at decision nodes. According to the present invention, to each individual track vector, or to each decision point of the pre-determined track, such guidance-related information is linked and stored with the vector representation of the pre-determined track.

Furthermore, to each individual track vector additional information may be linked about the part of the track that the vector represents. This information, stored as attributes and relationships of the vectors, could be the geometry, the street name, road class, topology and connectivity of the vector, but also information specifically relevant for the purpose of track and route navigation could be added. Examples thereof are height and slope information, pavement type, environment and vicinity info, tourist info, scenic routes, panoramic views, references to Points of Interest (POI) along the route and user specific info like the existence of cycle-tracks, pedestrian crossings, footpaths. Production and storage of such specific information as part of the track itself has clear advantages versus making it part of a bigger vector map. This specific track information may be added in a second production step. One advantage of this second production step is the production cost, since, not knowing upfront which tracks would ever be overlaid, the information should be produced for the full map coverage. By restricting the production of all this info to the course of the track only, the collection, production and maintenance of the info becomes much more feasible.

A second production method fulfils a need for an individual to create his or her own, personalised pre-determined routes and tracks. These routes and tracks may include, but are not limited to, non-calculated routes that users of navigation systems want to follow to get to their destinations (e.g. holiday destinations), or to be guided along a round trip, a sight seeing tour, a cycling or hiking tour, a trip with specific intermediate stops, etc.

The second production method comprises the on-line production of personalised pre-determined tracks, in whatever format, as a turn-by-turn non-calculated pre-determined track, by users of navigation systems. In order to make this possible, vector maps, possibly supplemented with appropriate raster maps, are put on-line, as part of an internet application that makes the production technique as described above available to the end users of the navigation systems. As a result, a user will be enabled to produce his own non-calculated routes in a very efficient, easy and straightforward way. Once his track or route is created, the application will enable him to download it in the specific format supported by his navigation system.

The present invention includes a computer program product which provides the functionality of any of the methods according to the present invention when executed on a computing device. Nowadays, such software is often offered on the Internet or a company Intranet for download, hence the present invention includes transmitting the printing computer product according to the present invention over a local or wide area network. The computing device may include one of a microprocessor and an FPGA.

Further, the present invention includes a data carrier such as a CD-ROM or a diskette which stores the computer program product in a machine-readable form and which executes at least one of the methods of the invention when executed on a computing device. The present invention thus includes a carrier medium for use in a device according to embodiments of the present invention, the carrier medium storing a vector representation of a pre-determined track and with the vector representation hard-coded guidance-related information. According to the present invention, the information stored on the carrier medium may be used per se for turn-by-turn navigation, without the need for further maps.

The terms "data carrier", "carrier medium" and "computer readable medium" as used herein refer to any medium that participates in providing instructions to a processor for execution. Such a medium may take many forms, including but not limited to, non-volatile media, volatile media, and transmission media. Non-volatile media includes, for example, optical or magnetic disks, such as a storage device which is part of mass storage. Volatile media includes dynamic memory such as RAM. Transmission media include coaxial cables, copper wire and fiber optics, including the wires that comprise a bus within a computer. Transmission media can also take the form of acoustic or light waves, such as those generated during radio wave and infra-red data communications.

Common forms of carrier media or computer readable media include, for example a floppy disk, a flexible disk, a hard disk, magnetic tape, or any other magnetic medium, a CD-ROM, any other optical medium, punch cards, paper tapes, any other physical medium with patterns of holes, a RAM, a PROM, an EPROM, a FLASH-EPROM, any other memory chip or cartridge, a carrier wave as described hereafter, or any other medium from which a computer can read.

Various forms of computer readable media may be involved in carrying one or more sequences of one or more instructions to a processor for execution. For example, the instructions may initially be carried on a magnetic disk of a remote computer. The remote computer can load the instructions into its dynamic memory and send the instructions over a telephone line using a modem. A modem local to the computer system can receive the data on the telephone line and use an infrared transmitter to convert the data to an infrared signal. An infrared detector coupled to a bus can receive the data carried in the infra-red signal and place the data on the bus. The bus carries data to main memory, from which a processor retrieves and executes the instructions. The instructions received by main memory may optionally be stored on a storage device either before or after execution by a processor. The instructions can also be transmitted via a carrier wave in a network, such as a LAN, a WAN or the internet. Transmission media can take the form of acoustic or light waves, such as those generated during radio wave and infrared data communications. Transmission media include coaxial cables, copper wire and fibre optics, including the wires that form a bus within a computer.

It is to be understood that although preferred embodiments, specific constructions and configurations have been discussed herein for devices according to the present invention, various changes or modifications in form and detail may be made without departing from the scope and spirit of this invention.

## Claims

1. A method of enabling turn-by-turn navigation along a non-calculated pre-determined track using an electronic device, the method comprising:
providing a turn-by-turn route description of the pre-determined track, comprising at least a non-calculated vector representation of the pre-determined track and hard-coded guidance-related information with the vector representation.

2. A method according to claim 1, wherein the guidance-related information comprises hard-coded guidance instructions.

3. A method according to claim 1, wherein the guidance-related information comprises characteristics of decision nodes of the vector representation so that guidance instructions for each decision node are derivable from the guidance-related information.

4. A method according to any of claims 2 or 3, wherein the guidance instructions comprise any of visual or audible navigation instructions.

5. A method according to any of the previous claims, wherein the turn-by-turn route description furthermore comprises, for at least one vector of the vector representation, additional information about the part of the track that the vector represents.

6. A method according to claim 5, wherein the additional information comprises at least one of geometry, street name, road class, topology, connectivity of the vector, height and slope information, pavement type, environment, vicinity info, tourist information, scenic routes, panoramic views, references to points-of-interest along the route, user specific info such as existence of cycle tracks, pedestrian crossings, footpaths.

7. A method according to any of the previous claims, furthermore comprising using the provided turn-by-turn route description of the pre-determined track for performing navigation.

8. A method according to claim 7, furthermore comprising displaying at least part of the pre-determined track on top of a displayed map.

9. A method for producing a non-calculated pre-determined track for turn-by-turn navigation, the track being storable in an electronic device, the method comprising:
producing a non-calculated vector representation of the pre-determined track, the vector representation comprising a plurality of decision nodes, and
adding, for each decision node, hard-coded guidance-related information to the vector representation of the pre-determined track.

10. A method according to claim 9, furthermore comprising storing the vector representation together with the hard-coded guidance-related information.

11. A method according to any of claims 9 or 10, wherein the guidance-related information comprises hard-coded guidance instructions.

12. A method according to any of claims 9 or 10, wherein the guidance-related information comprises characteristics of decision nodes of the vector representation so that guidance instructions are derivable from the guidance-related information.

13. A method according to any of claims 9 to 12, furthermore comprising, for and with at least one vector of the vector representation, storing additional information about the part of the track that the vector represents.

14. A method according to claim 13, wherein the additional information comprises at least one of geometry, street name, road class, topology, connectivity of the vector, height and slope information, pavement type, environment, vicinity info, tourist information, scenic routes, panoramic views, references to points-of-interest along the route, user specific info such as existence of cycle tracks, pedestrian crossings, footpaths.

15. A device for providing turn-by-turn navigation along a non-calculated pre-determined track, comprising:
first memory means storing a non-calculated vector representation of the pre-determined track along with hard-coded guidance-related information, means for providing navigation instructions from the vector representation and the guidance-related information.

16. A device according to claim 15, wherein the means for providing navigation instructions comprises control means for deriving the navigation instructions from the hard-coded guidance-related information.

17. A device according to claim 16, wherein the means for providing navigation instructions furthermore comprises visualisation means for visualising the derived navigation instructions.

18. A device according to any of claims 16 or 17, wherein the means for providing navigation instructions furthermore comprises audio means for making the derived navigation instructions audible.

19. A device according to any of claims 15 to 18, furthermore comprising a second memory means for storing a vector map comprising at least data corresponding to the vector representation of the pre-determined track.

20. A device according to claim 19, furthermore comprising visualisation means for visualising the vector representation of the pre-determined track on top of a corresponding part of the data of the vector map.

21. A device according to claim 20, wherein the visualisation means includes a screen.

22. A device according to any of claims 15 to 21, furthermore comprising a position sensor means.

23. A device according to any of claims 15 to 22, furthermore comprising means for downloading a non-calculated pre-determined track from a remote location, the downloaded pre-determined track being for being stored in the first memory means.

24. A computer program product which, when executed on a processing device, executes a method of any of claims 1 to 14.

25. A machine readable data storage device for storing a computer program product of claim 24.

26. Transmission of the computer product of claim 24 over a local or wide area telecommunications network.

27. A carrier medium storing a non-calculated vector representation of a pre-determined track, the vector representation comprising decision nodes for navigation purposes, wherein the carrier medium furthermore stores hard-coded guidance-related information.
